# EUROPEAN PATENT APPLICATION

(11) **EP 4 752 333 A1**
(43) Date of publication of application: **03.06.2026**
(21) Application number: 25206454.8
(22) Date of filing: 02.10.2025
(51) Int. Cl.: F01D 9/06, F01D 5/18

(54) **ASSEMBLIES FOR A TURBINE ENGINE**

(30) Priority: 02.12.2024 US 202418965586
(71) Applicant: RTX Corporation, Farmington, CT 06032 (US)
(72) Inventor: BERGMAN, Russell J., South Windsor, 06074 (US); GHIGLIOTTY ROSADO, Jaime G., Cabo Rojo, 00623 (US); SURACE, Raymond, Newington, 06111 (US)
(74) Representative: Dehns

(57) **Abstract**

A turbine engine (24) assembly includes an airfoil (102), a first baffle (104) and a second baffle (106). The first baffle (104) is disposed in a cavity (128) in the airfoil (102). The first baffle (104) extends spanwise from a first baffle base end (146) to a first baffle tip end (148) disposed at an airfoil tip end (110). The second baffle (106) is disposed in the cavity (128) longitudinally between and next to the first baffle (104) and an airfoil interior wall (121). The second baffle (106) extends spanwise from a second baffle base end (166) to a second baffle tip end (168) disposed at the airfoil tip end (110).

## Description

### BACKGROUND OF THE DISCLOSURE

### 1. Technical Field

This disclosure relates generally to a turbine engine and, more particularly, to a turbine vane structure for the turbine engine.

### 2. Background Information

A gas turbine engine such as a turbofan engine may include multiple vane structures within its turbine section. Various types and configurations of turbine section vane structures are known in the art. While these known turbine section vane structures have various benefits, there is still room in the art for improvement.

### SUMMARY OF THE DISCLOSURE

According to an aspect of the present disclosure, an assembly is provided for a turbine engine. This assembly includes an airfoil, a first baffle and a second baffle. The airfoil includes an airfoil first sidewall, an airfoil second sidewall and an airfoil interior wall. The airfoil first sidewall and the airfoil second sidewall extend longitudinally between and meet at an airfoil leading edge and an airfoil trailing edge. The airfoil first sidewall and the airfoil second sidewall extend spanwise from an airfoil base end to an airfoil tip end. The airfoil interior wall extends laterally along a cavity between the airfoil first sidewall and the airfoil second sidewall. The first baffle is disposed in the cavity. The first baffle extends spanwise from a first baffle base end to a first baffle tip end disposed at the airfoil tip end. The second baffle is disposed in the cavity longitudinally between and next to the first baffle and the airfoil interior wall. The second baffle extends spanwise from a second baffle base end to a second baffle tip end disposed at the airfoil tip end.

According to another aspect of the present disclosure, another assembly is provided for a turbine engine. This assembly includes an inner platform, an outer platform and a plurality of vanes. The inner platform extends circumferentially about an axis. The outer platform is radially outboard of the inner platform and extends circumferentially about the axis. The vanes are arranged circumferentially about the axis in an array radially between the inner platform and the outer platform. A first of the vanes includes an airfoil, a first baffle and a second baffle. The airfoil extends spanwise between and is connected to the inner platform and the outer platform. The airfoil extends longitudinally from an airfoil leading edge to an airfoil trailing edge. The airfoil extends laterally between opposing airfoil sides. A cavity projects radially through the outer platform and spanwise into the airfoil. The first baffle is disposed in the cavity along the outer platform and the airfoil. The second baffle is disposed in the cavity along the outer platform and the airfoil. The second baffle longitudinally engages the first baffle. The outer platform projects longitudinally into a channel of the second baffle.

According to still another aspect of the present disclosure, another assembly is provided for a turbine engine. This assembly includes an inner platform, an outer platform and a plurality of vanes. The inner platform extends circumferentially about an axis. The outer platform is radially outboard of the inner platform and extends circumferentially about the axis. The vanes are arranged circumferentially about the axis in an array radially between the inner platform and the outer platform. A first of the vanes includes an airfoil, a first baffle and a second baffle. The airfoil extends radially between and is connected to the inner platform and the outer platform. The airfoil extends longitudinally from an airfoil leading edge to an airfoil trailing edge. The airfoil extends laterally between opposing airfoil sides. A cavity projects radially through the outer platform and into the airfoil. The first baffle projects radially a first distance into the cavity. The second baffle projects radially a second distance into the cavity that is less than the first distance. The second baffle is abutted longitudinally against the first baffle within the cavity.

The following optional features may be applied to any of the above aspects.

The first baffle base end may be disposed at the airfoil base end. The second baffle base end may be spaced spanwise outwards from the airfoil base end towards the airfoil tip end.

A spanwise height of the first baffle from the first baffle base end to the first baffle tip end may be greater than a spanwise height of the second baffle from the second baffle base end to the second baffle tip end.

A spanwise height of the first baffle from the first baffle base end to the first baffle tip end may be equal to or greater than two times a spanwise height of the second baffle from the second baffle base end to the second baffle tip end.

A spanwise height of the airfoil from the airfoil base end to the airfoil tip end may be equal to or greater than two times a spanwise height of the second baffle from the second baffle base end to the second baffle tip end.

The second baffle may include a hollow body, a flange and a neck. The hollow body may be disposed in the cavity longitudinally between and next to the first baffle and the airfoil interior wall. The flange may be disposed at the second baffle tip end and outside of the cavity. The neck may project spanwise from the hollow body to the flange.

The hollow body may have a polygonal cross-sectional geometry.

The hollow body may have a longitudinal width that decreases as the hollow body extends spanwise towards the second baffle base end.

The assembly may also include a platform connected to the airfoil at the airfoil tip end. The cavity may project spanwise through the platform. A portion of the platform may project longitudinally into a channel formed in the second baffle spanwise between the hollow body and the flange.

The airfoil may also include a locator projecting longitudinally into the cavity. The second baffle may be spanwise abutted against the locator within the cavity.

The second baffle may be formed from a single piece of material.

The first baffle may have a longitudinal width that decreases as the first baffle extends spanwise towards the first baffle base end.

The first baffle may have a lateral width that decreases as the first baffle extends longitudinally towards the airfoil trailing edge.

The first baffle may extend longitudinally from a first baffle end to a first baffle trailing edge. The first baffle may extend laterally between a first baffle first side and a first baffle second side with the first baffle second side meeting the first baffle first side at the first baffle trailing edge and with the first baffle first side laterally spaced from the first baffle second side at the first baffle end.

A passage may be formed within the airfoil by a portion of the cavity outside of the first baffle and the second baffle. The airfoil may also include a second airfoil interior wall and a trailing edge cooling circuit with a plurality of inlets and a plurality of outlets. The inlets may project through the second airfoil interior wall and may be fluidly coupled to the passage. The outlets may be disposed spanwise along the airfoil trailing edge and may be fluidly coupled to an environment outside of the airfoil.

The trailing edge cooling circuit may also include a circuit cavity longitudinally between and may be fluidly coupled to the inlets and the outlets.

The assembly may also include a turbine vane structure including the airfoil, the first baffle and the second baffle.

The assembly may also include an inner platform, an outer platform and a plurality of vanes. The inner platform may extend circumferentially around an axis. The outer platform may extend circumferentially around the axis. The vanes may be arranged circumferentially around the axis in an array. Each of the vanes may extend spanwise from the inner platform to the outer platform. A first of the vanes may be configured as or otherwise include the airfoil. The airfoil may be connected to the inner platform at the airfoil base end. The airfoil may be connected to the outer platform at the airfoil tip end.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft powerplant.
FIG. 2 is a partial sectional illustration of a turbine section engine assembly.
FIG. 3 is a schematic end view illustration of a turbine vane structure.
FIG. 4 is a partial side sectional illustration of the turbine vane structure mated with an inner air seal plate.
FIG. 5 is a sectional illustration of a turbine vane.
FIG. 6 is a side cutaway illustration of the turbine vane structure mated with the inner air seal plate.
FIG. 7 is a sectional illustration of a first vane baffle.
FIG. 8 is a cross-sectional illustration of the first vane baffle.
FIG. 9 is a side cutaway illustration of a portion of the turbine vane structure at a second vane baffle.
FIG. 10 is a cross-sectional illustration of the second vane baffle.
FIGS. 11A and 11B are partial end view illustrations of the second vane baffle with various flange arrangements.

### DETAILED DESCRIPTION

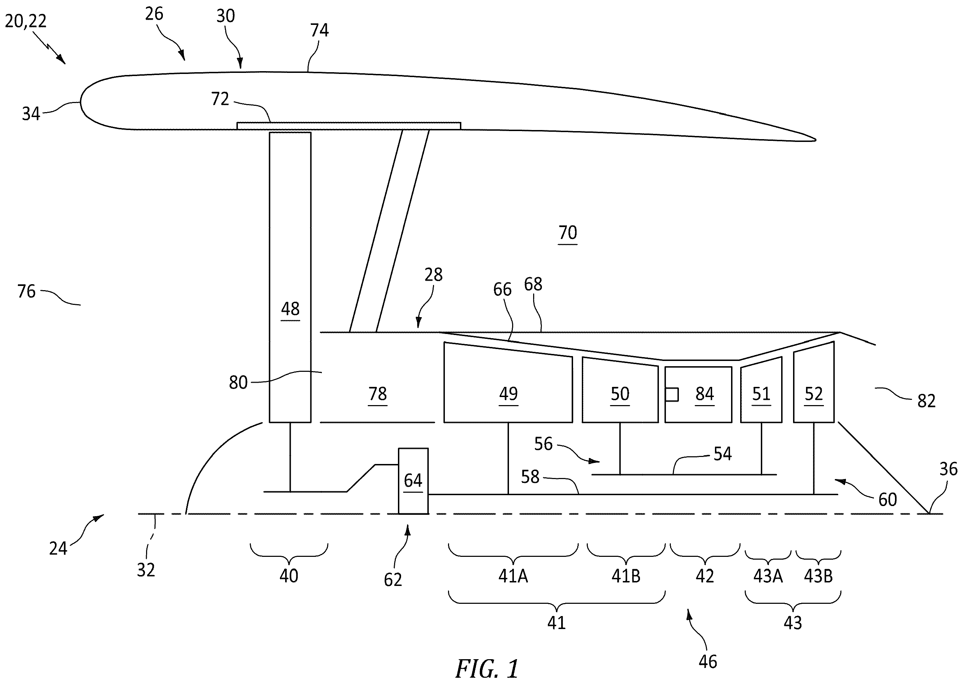

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted or open rotor propulsion system. Moreover, the aircraft powerplant 20 is not limited to propulsion system applications. The aircraft powerplant 20, for example, may alternatively (or also) be configured as an electrical power system for the aircraft (e.g., an auxiliary power unit (APU)) or a ground-based (e.g., industrial) electrical power system.

The aircraft propulsion system 22 includes a gas turbine engine 24 (e.g., a turbofan engine) housed within a stationary engine housing 26, which engine housing 26 of FIG. 1 includes an inner housing structure 28 and an outer housing structure 30. The aircraft propulsion system 22 extends axially along an axis 32 between an axial forward, upstream end 34 of the aircraft propulsion system 22 and an axial aft, downstream end 36 of the aircraft propulsion system 22. Briefly, the powerplant axis 32 may be a centerline axis of the aircraft propulsion system 22, the turbine engine 24 and/or one or more of its members. The powerplant axis 32 may also or alternatively be a rotational axis for one or more members of the turbine engine 24.

The aircraft propulsion system 22 and its turbine engine 24 of FIG. 1 includes a propulsor section 40 (e.g., a fan section), a compressor section 41, a combustor section 42 and a turbine section 43. The compressor section 41 of FIG. 1 includes a low pressure compressor (LPC) section 41A and a high pressure compressor (HPC) section 41B. The turbine section 43 of FIG. 1 includes a high pressure turbine (HPT) section 43A and a low pressure turbine (LPT) section 43B. Here, at least (or only) the LPC section 41A, the HPC section 41B, the combustor section 42, the HPT section 43A and the LPT section 43B collectively form a core 46 of the turbine engine 24.

The engine sections 40-43B may be arranged sequentially along the powerplant axis 32 within the engine housing 26. The propulsor section 40 includes a bladed propulsor rotor 48; e.g., a fan rotor. The LPC section 41A includes a bladed low pressure compressor (LPC) rotor 49. The HPC section 41B includes a bladed high pressure compressor (HPC) rotor 50. The HPT section 43A includes a bladed high pressure turbine (HPT) rotor 51. The LPT section 43B includes a bladed low pressure turbine (LPT) rotor 52.

The HPC rotor 50 is coupled to and rotatable with the HPT rotor 51. The HPC rotor 50 of FIG. 1, for example, is connected to the HPT rotor 51 through a high speed shaft 54. At least (or only) the HPC rotor 50, the HPT rotor 51 and the high speed shaft 54 collectively form a high speed rotating structure 56; e.g., a high speed spool of the engine core 46. This high speed rotating structure 56 of FIG. 1 and its members 50, 51 and 54 are rotatable about the powerplant axis 32.

The LPC rotor 49 is coupled to and rotatable with the LPT rotor 52. The LPC rotor 49 of FIG. 1, for example, is connected to the LPT rotor 52 through a low speed shaft 58. At least (or only) the LPC rotor 49, the LPT rotor 52 and the low speed shaft 58 collectively form a low speed rotating structure 60; e.g., a low speed spool of the engine core 46. This low speed rotating structure 60 is further coupled to the propulsor rotor 48 through a drivetrain 62. The drivetrain 62 may be configured as a geared drivetrain, where a geartrain 64 (e.g., a transmission, a speed change device, an epicyclic geartrain, etc.) is disposed between and operatively couples the propulsor rotor 48 to the low speed rotating structure 60 and its LPT rotor 52. With this arrangement, the propulsor rotor 48 may rotate at a different (e.g., slower) rotational speed than the low speed rotating structure 60 and its LPT rotor 52. Alternatively, the drivetrain 62 may be configured as a direct-drive drivetrain, where the geartrain 64 is omitted. With such an arrangement, the propulsor rotor 48 rotates at a common (the same) rotational speed as the low speed rotating structure 60 and its LPT rotor 52. The low speed rotating structure 60 of FIG. 1 and its members 49, 52 and 58 as well as the propulsor rotor 48 are rotatable about the powerplant axis 32. However, it is contemplated the low speed rotating structure 60 may alternatively be rotatable about another axis radially and/or angularly offset from the rotational axis of the propulsor rotor 48 and/or the centerline axis of the turbine engine 24.

The inner housing structure 28 of FIG. 1 includes an inner case 66 (e.g., a core case) for the turbine engine 24 and an inner nacelle structure 68 (sometimes referred to as an inner fixed structure (IFS)). The inner case 66 is disposed radially outboard of, extends axially along and may circumscribe one or more or all of the engine sections 41A-43B and their respective engine rotors 49-52. The inner case 66 may thereby house and provide a support structure for the respective engine sections 41A-43B and their respective engine rotors 49-52. The inner nacelle structure 68 is configured to provide an aerodynamic cover over the engine core 46 and its inner case 66. The inner housing structure 28 and its inner nacelle structure 68 may also form a radial inner peripheral boundary of a bypass flowpath 70 (e.g., an annular bypass flowpath) within the aircraft propulsion system 22.

The outer housing structure 30 of FIG. 1 includes an outer case 72 (e.g., a fan case) for the turbine engine 24 and an outer nacelle structure 74. The outer case 72 is disposed radially outboard of, extends axially along and may circumscribe the propulsor section 40 and its propulsor rotor 48. The outer case 72 may thereby house and provide a containment structure for the propulsor section 40 and its propulsor rotor 48. The outer nacelle structure 74 is configured to provide an aerodynamic cover over the outer case 72. The outer housing structure 30 and its outer nacelle structure 74 may also form a radial outer peripheral boundary of the bypass flowpath 70.

During operation, ambient air from outside of the aircraft enters the aircraft propulsion system 22 and its turbine engine 24 through an airflow inlet 76. This air is directed across the propulsor section 40 and into a core flowpath 78 (e.g., annular core flowpath) and the bypass flowpath 70. The core flowpath 78 of FIG. 1 extends sequentially through the LPC section 41A, the HPC section 41B, the combustor section 42, the HPT section 43A and the LPT section 43B from an airflow inlet 80 into the core flowpath 78 to a combustion products exhaust 82 out from the core flowpath 78. The air entering the core flowpath 78 may be referred to as "core air". The bypass flowpath 70 extends through a bypass duct, which bypass flowpath 70 and bypass duct bypass (e.g., are disposed radially outboard of and extend along) the engine core 46 and the inner housing structure 28. The air within the bypass flowpath 70 may be referred to as "bypass air".

The core air is compressed by the LPC rotor 49 and the HPC rotor 50 and is directed into a combustion chamber 84 (e.g., an annular combustion chamber) of a combustor (e.g., an annular combustor) in the combustor section 42. Fuel is injected into the combustion chamber 84 by one or more fuel injectors and mixed with the compressed core air to provide a fuel-air mixture. This fuel-air mixture is ignited and combustion products thereof flow through and sequentially drive rotation of the HPT rotor 51 and the LPT rotor 52 about the powerplant axis 32. The rotation of the HPT rotor 51 and the LPT rotor 52 respectively drive rotation of the HPC rotor 50 and the LPC rotor 49 about the powerplant axis 32 and, thus, compression of the air received from the core inlet 80. The rotation of the LPT rotor 52 also drives rotation of the propulsor rotor 48. The rotation of the propulsor rotor 48 propels the bypass air through and out of the bypass flowpath 70. The propulsion of the bypass air may account for a majority of thrust generated by the turbine engine 24 of FIG. 1.

While the turbine engine 24 is described above with a particular two rotating structure arrangement, the present disclosure is not limited thereto. For example, the LPC rotor 49 may be omitted to configure the LPT rotor 52 as a power turbine (PT) rotor for the propulsor rotor 48. In another example, the turbine engine 24 may also include another rotating structure; e.g., an intermediate speed spool for the engine core 46.

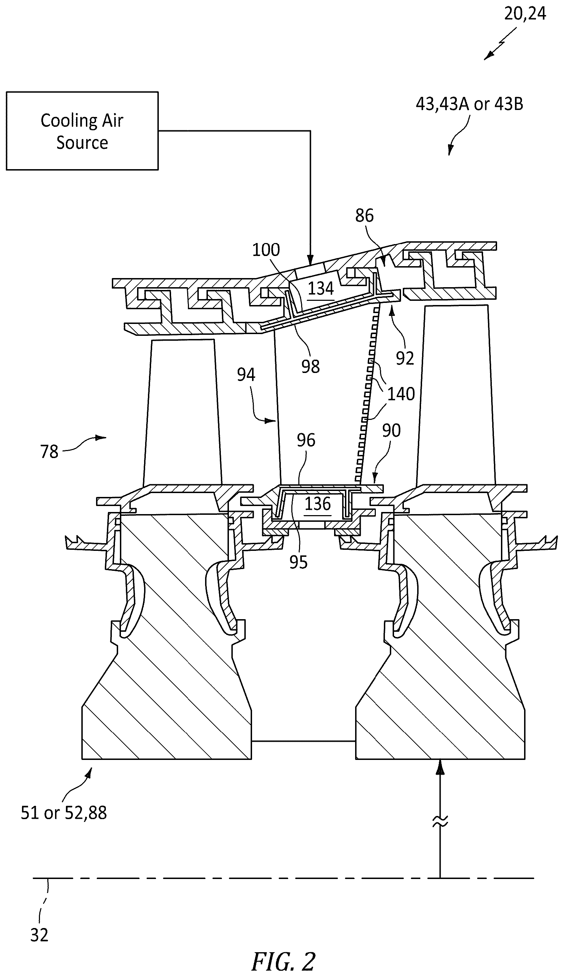

FIG. 2 illustrates an air-cooled turbine vane structure 86 (e.g., a turbine vane array) for the turbine section 43. This turbine vane structure 86 may be arranged at various locations along the core flowpath 78 within the turbine section 43. The turbine vane structure 86 of FIG. 2, for example, is arranged between a set of adjacent stages of a turbine rotor 88 along the core flowpath 78. With this arrangement, the turbine vane structure 86 may be disposed in the HPT section 43A of FIG. 1, and the turbine rotor 88 may be the HPT rotor 51. Alternatively, the turbine vane structure 86 may be disposed in the LPT section 43B of FIG. 1, and the turbine rotor 88 may be the LPT rotor 52. Still alternatively, the turbine vane structure 86 may be disposed between the HPT section 43A and the LPT section 43B of FIG. 1, where the turbine rotor stage upstream of the turbine vane structure 86 along the core flowpath 78 is part of the HPT rotor 51, and where the turbine rotor stage downstream of the turbine vane structure 86 along the core flowpath 78 is part of the LPT rotor 52. The turbine vane structure 86 of the present disclosure, however, is not limited to such exemplary arrangements. The turbine vane structure 86 of FIG. 2 includes a radial inner platform 90, a radial outer platform 92 and a plurality of stationary turbine vanes 94.

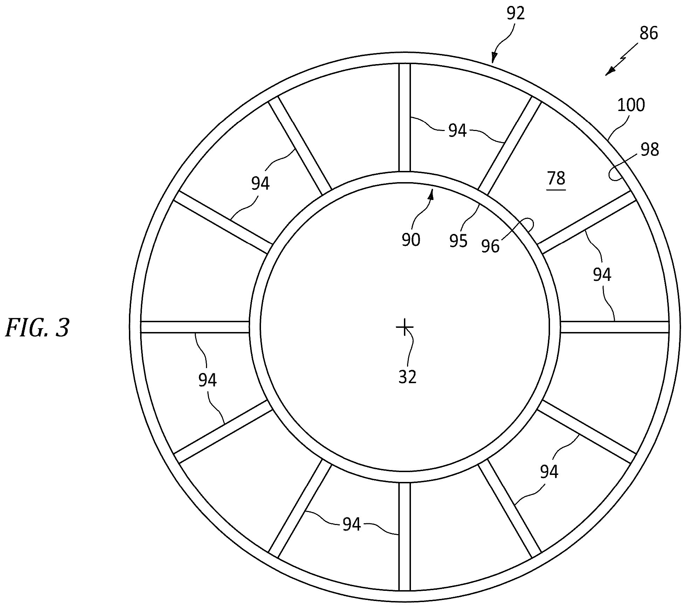

The inner platform 90 extends axially along the powerplant axis 32 from an axial upstream end of the inner platform 90 to an axial downstream end of the inner platform 90. The inner platform 90 extends radially from a radial inner side 95 of the inner platform 90 to a radial outer side 96 of the inner platform 90. Referring to FIG. 3, the inner platform 90 extends circumferentially about (e.g., completely around) the powerplant axis 32. The inner platform 90 of FIG. 3 may thereby be configured with a full-hoop (e.g., tubular) geometry. At the inner platform outer side of FIG. 2, the inner platform 90 forms a radial inner peripheral boundary of a longitudinal length of the core flowpath 78 which extends through the turbine vane structure 86.

The outer platform 92 is spaced radially outboard from the inner platform 90. The outer platform 92 extends axially along the powerplant axis 32 from an axial upstream end of the outer platform 92 to an axial downstream end of the outer platform 92. The outer platform 92 extends radially from a radial inner side 98 of the outer platform 92 to a radial outer side 100 of the outer platform 92. Referring to FIG. 3, the outer platform 92 extends circumferentially about (e.g., completely around) the powerplant axis 32. The outer platform 92 of FIG. 3 may thereby be configured with a full-hoop (e.g., tubular) geometry. At the outer platform inner side 98 of FIG. 2, the outer platform 92 forms a radial outer peripheral boundary of the longitudinal length of the core flowpath 78 which extends through the turbine vane structure 86.

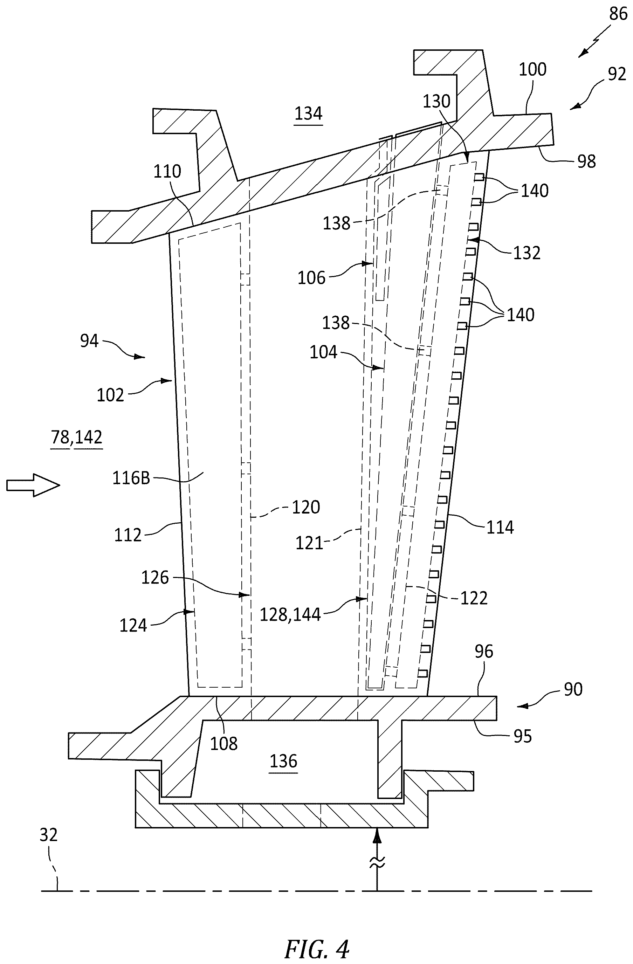

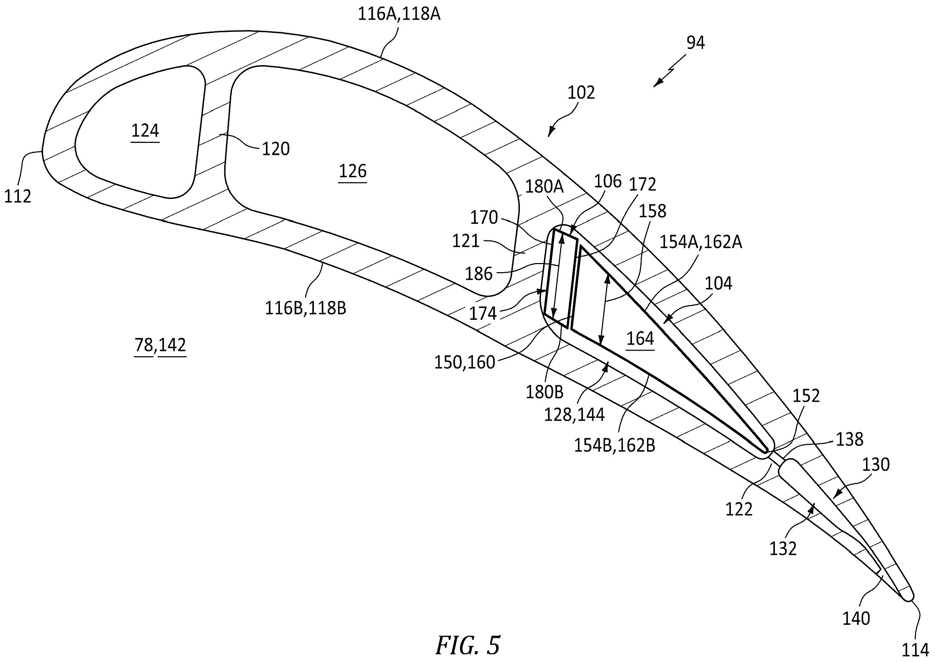

Referring to FIG. 3, the turbine vanes 94 are arranged and may be equispaced circumferentially about the powerplant axis 32 in an annular vane array. This vane array and its turbine vanes 94 are disposed radially between the inner platform 90 and the outer platform 92. Referring to FIGS. 4 and 5, each of the turbine vanes 94 includes a turbine vane airfoil 102 arranged with a set of one or more internal baffles 104 and 106.

Referring to FIG. 4, the vane airfoil 102 extends spanwise (e.g., radially relative to the powerplant axis 32) from a radial inner, base end 108 of the vane airfoil 102 to a radial outer, tip end 110 of the vane airfoil 102. The airfoil base end 108 of FIG. 4 is disposed radially adjacent the inner platform 90, and the vane airfoil 102 may be formed integral with or otherwise connected to the inner platform 90 at (e.g., on, adjacent or proximate) the airfoil base end 108. The airfoil tip end 110 of FIG. 4 is disposed radially adjacent the outer platform 92, and the vane airfoil 102 may be formed integral with or otherwise connected to the outer platform 92 at the airfoil tip end 110. The vane airfoil 102 extends longitudinally (e.g., generally axially along the powerplant axis 32) from a leading edge 112 of the vane airfoil 102 to a trailing edge 114 of the vane airfoil 102, where the airfoil leading edge 112 is upstream of the airfoil trailing edge 114 along the core flowpath 78. Referring to FIG. 5, the vane airfoil 102 extends laterally (e.g., circumferentially about the powerplant axis 32, or tangentially to a reference circle circumscribing the powerplant axis 32) between and to opposing lateral sides 116A and 116B (generally referred to as "116") of the vane airfoil 102. The airfoil first side 116A of FIG. 5 is a convex, suction side of the vane airfoil 102. The airfoil second side 116B of FIG. 5 is a concave, pressure side of the vane airfoil 102. The opposing airfoil sides 116 extend longitudinally to and meet at the airfoil leading edge 112 and the airfoil trailing edge 114. Referring to FIGS. 4 and 5, each of the airfoil members 112, 114, 116A and 116B extends spanwise from the airfoil base end 108 / the inner platform 90 to the airfoil tip end 110 / the outer platform 92.

Referring to FIG. 5, the vane airfoil 102 includes a first (e.g., convex, suction) sidewall 118A, a second (e.g., concave, pressure) sidewall 118B and one or more interior walls 120-122; e.g., ribs, dividers, etc. With this arrangement, the vane airfoil 102 is configured with one or more interior volumes; e.g., cavities and/or passages. More particularly, the vane airfoil 102 of FIG. 5 is configured with a leading edge cooling passage 124, an intermediate cooling passage 126 and a trailing edge cooling cavity 128. The vane airfoil 102 of FIG. 5 also includes a trailing edge cooling circuit 130 with a circuit cavity 132.

The airfoil first sidewall 118A forms the airfoil first side 116A. The airfoil second sidewall 118B forms the airfoil second side 116B. These airfoil sidewalls 118A and 118B (generally referred to as "118") extend longitudinally to and meet at the airfoil leading edge 112 and the airfoil trailing edge 114. The interior walls 120-122 are arranged and spaced apart longitudinally between the airfoil leading edge 112 and the airfoil trailing edge 114. Each of these interior walls 120-122 of FIG. 5 extends laterally between and is connected to the airfoil first sidewall 118A and the airfoil second sidewall 118B. The interior walls 120-122 thereby divide an interior of the vane airfoil 102 of FIG. 5 into the interior volumes 124, 126, 128 and 132.

Each of the interior volumes 124, 126, 128, 132 may extend laterally within the vane airfoil 102 between and to the airfoil first sidewall 118A and the airfoil second sidewall 118B. The leading edge cooling passage 124 extends longitudinally within the vane airfoil 102 from an upstream intersection between the airfoil sidewalls 118 at the airfoil leading edge 112 to the leading edge interior wall 120 (e.g., the interior wall longitudinally closest to the airfoil leading edge 112). The intermediate cooling passage 126 extends longitudinally within the vane airfoil 102 from the leading edge interior wall 120 to the intermediate interior wall 121. The trailing edge cooling cavity 128 extends longitudinally within the vane airfoil 102 from the intermediate interior wall 121 to the trailing edge interior wall 122 (e.g., the interior wall longitudinally closest to the airfoil trailing edge 114). The circuit cavity 132 extends longitudinally within the vane airfoil 102 from the trailing edge interior wall 122 to a downstream intersection between the airfoil sidewalls 118 at the airfoil trailing edge 114.

Referring to FIG. 4, each of the interior volumes 124, 126, 128, 132 extends spanwise in the vane airfoil 102 from (or about) the airfoil tip end 110 to (or about) the airfoil base end 108. Each of the interior volumes 126 and 128, for example, may project spanwise into the vane airfoil 102 from the airfoil tip end 110 to a distal end at (or near) the airfoil base end 108. The interior volumes 126 and 128 also project radially through the outer platform 92 so as to be fluidly coupled with an outer plenum 134 radially adjacent and outboard of the outer platform 92. Alternatively, the interior volumes 126 and 128 may be fluidly coupled to discrete plenums so as to receive, for example, cooling air at different temperatures and/or pressures. In addition, the intermediate cooling passage 126 is also fluidly coupled with an inner plenum 136 through one or more ports in the inner platform 90, which inner plenum 136 may be radially adjacent and inboard of the inner platform 90. Alternatively, the intermediate cooling passage 126 may project radially through the inner platform 90 to the inner plenum 136. The trailing edge cooling cavity 128 of FIG. 4, by contrast, is fluidly separated and decoupled from the inner plenum 136 by the inner platform 90. In addition, the circuit cavity 132 of FIG. 4 extends spanwise within (e.g., not into or through) the vane airfoil 102. This circuit cavity 132 is thereby fluidly separated and decoupled from the outer plenum 134 by at least the outer platform 92. The circuit cavity 132 is also fluidly separated and decoupled from the inner plenum 136 by at least the inner platform 90.

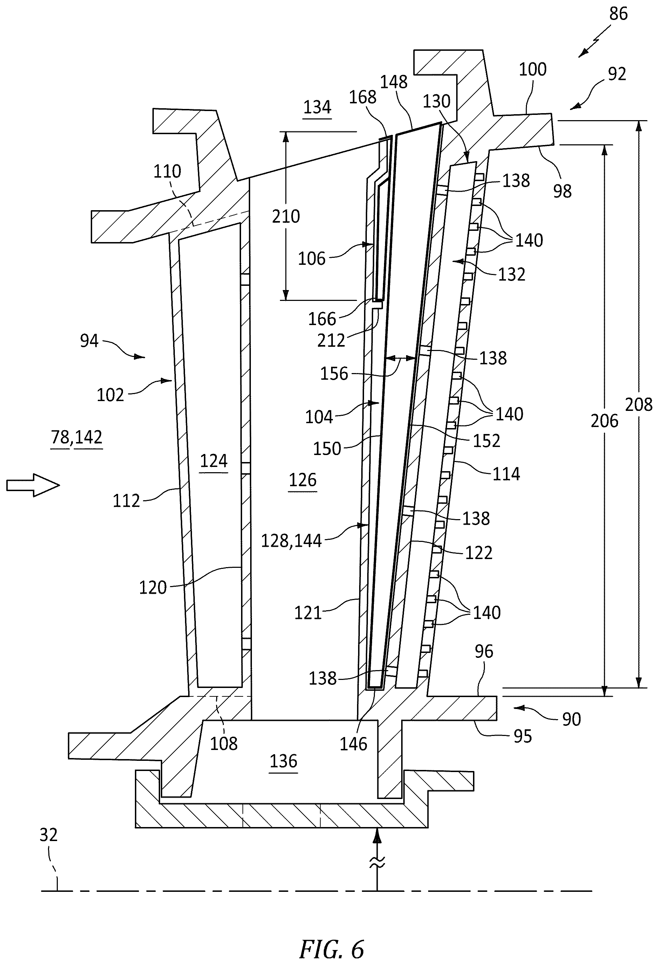

Referring to FIG. 6, the trailing edge cooling circuit 130 includes the circuit cavity 132, one or more circuit inlets 138 and one or more circuit outlets 140 (e.g., cooling apertures). The circuit inlets 138 are arranged and may (or may not) be equispaced spanwise along the trailing edge interior wall 122. Each of these circuit inlets 138 may be a port which projects longitudinally through the trailing edge interior wall 122 from the trailing edge cooling cavity 128 to the circuit cavity 132. The circuit inlets 138 thereby fluidly couple the trailing edge cooling cavity 128 to the circuit cavity 132. The circuit outlets 140 are arranged at, along and may (or may not) be equispaced spanwise along the airfoil trailing edge 114. Each of the circuit outlets 140 may be a port which projects through a respective sidewall 118 (e.g., 118B of FIG. 4) of the vane airfoil 102 from the circuit cavity 132 to an environment 142 external to the vane airfoil 102 - the core flowpath 78. Each circuit outlet of FIG. 5 is disposed in the airfoil second side 116B, longitudinally adjacent the airfoil trailing edge 114. It is contemplated, however, one or more of the circuit outlets 140 may alternatively be disposed in the airfoil trailing edge 114.

Each set of vane baffles 104 and 106 is disposed (e.g., partially or completely) within the trailing edge cooling cavity 128 in a respective one of the vane airfoils 102. These vane baffles 104 and 106 are arranged together (e.g., longitudinally next to one another) within the trailing edge cooling cavity 128 to collectively form a single, multi-piece trailing edge cavity baffle. The first vane baffle 104 of FIG. 5 forms a primary, full-length section of the trailing edge cavity baffle. The second vane baffle 106 of FIG. 5 forms a secondary, partial-length section of the trailing edge cavity baffle; e.g., a mini-baffle. With this arrangement, the respective turbine vane 94 is provided with a trailing edge cooling passage 144 formed by and extending between the airfoil walls 118A, 118B, 121 and 122 and the trailing edge cavity baffle and its members 104 and 106.

Referring to FIG. 6, the first vane baffle 104 extends spanwise (e.g., radially relative to the powerplant axis 32) from a radial inner, base end 146 of the first vane baffle 104 to a radial outer, tip end 148 of the first vane baffle 104. The first baffle base end 146 may be disposed at (or near) the airfoil base end 108. The first baffle tip end 148 may be disposed at (or near) the airfoil tip end 110. The first baffle tip end 148 of FIG. 6, for example, is spanwise (e.g., radially) aligned with or proximate the outer platform outer side 100. The first vane baffle 104 extends longitudinally (e.g., generally axially along the powerplant axis 32) from an upstream end 150 of the first vane baffle 104 to a trailing edge 152 of the first vane baffle 104, where the first baffle end 150 is upstream of the first baffle trailing edge 152 relative to the core flowpath 78. Referring to FIG. 5, the first vane baffle 104 extends laterally between and to opposing lateral sides 154A and 154B (generally referred to as "154") of the first vane baffle 104. The first baffle first side 154A of FIG. 5 is laterally next to the airfoil first sidewall 118A. The first baffle second side 154B of FIG. 5 is laterally next to the airfoil second sidewall 118B. The opposing first baffle sides 154 project longitudinally out from the first baffle end 150 to and meet at the first baffle trailing edge 152. Referring to FIGS. 5 and 6, each member 150, 152, 154A and 154B of the first vane baffle 104 extends spanwise from the first baffle base end 146 to the first baffle tip end 148. With this arrangement, referring to FIG. 5, a first side portion of the trailing edge cooling passage 144 is at least partially formed by and laterally between the airfoil first sidewall 118A and the first baffle first side 154A. Similarly, a second portion of the trailing edge cooling passage 144 is at least partially formed by and laterally between the airfoil second sidewall 118B and the first baffle second side 154B.

Referring to FIG. 6, the first vane baffle 104 has a longitudinal width 156 extending from the first baffle end 150 to the first baffle trailing edge 152. This first baffle longitudinal width 156 may decrease as the first vane baffle 104 extends spanwise from (or about) the first baffle tip end 148 to (or about) the first baffle base end 146. Referring to FIG. 5, the first vane baffle 104 has a lateral width 158 extending between its opposing first baffle sides 154. This first baffle lateral width 158 may decrease as the first vane baffle 104 extends longitudinally from (or about) the first baffle end 150 to (or about) the first baffle trailing edge 152.

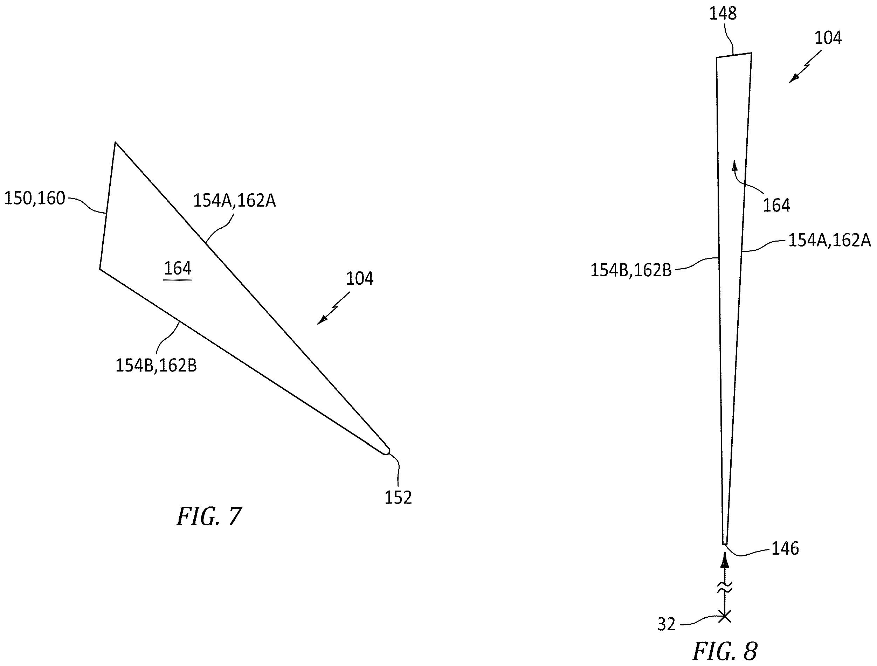

Referring to FIG. 7, the first vane baffle 104 includes an upstream endwall 160, a first (e.g., suction side) sidewall 162A and a second (e.g., pressure side) sidewall 162B. The first vane baffle 104 also includes an interior cavity 164. The first baffle endwall 160 is disposed at and forms the first baffle end 150. The first baffle endwall 160 extends laterally, along a (e.g., entire) lateral width of the first baffle cavity 164, between and to the first baffle first sidewall 162A and the first baffle second sidewall 162B. The first baffle first sidewall 162A is disposed at and forms the first baffle first side 154A. The first baffle second sidewall 162B is disposed at and forms the first baffle second side 154B. Each of these first baffle sidewalls 162 projects longitudinally, along a (e.g., entire) longitudinal length of the first baffle cavity 164, out from the first baffle endwall 160 to and meet at (or about) the first baffle trailing edge 152. Referring to FIG. 8, each of the first baffle sidewalls 162 also projects spanwise, along a (e.g., entire) spanwise length of the first baffle cavity 164, from the first baffle tip end 148 to and may meet at (or about) the first baffle base end 146.

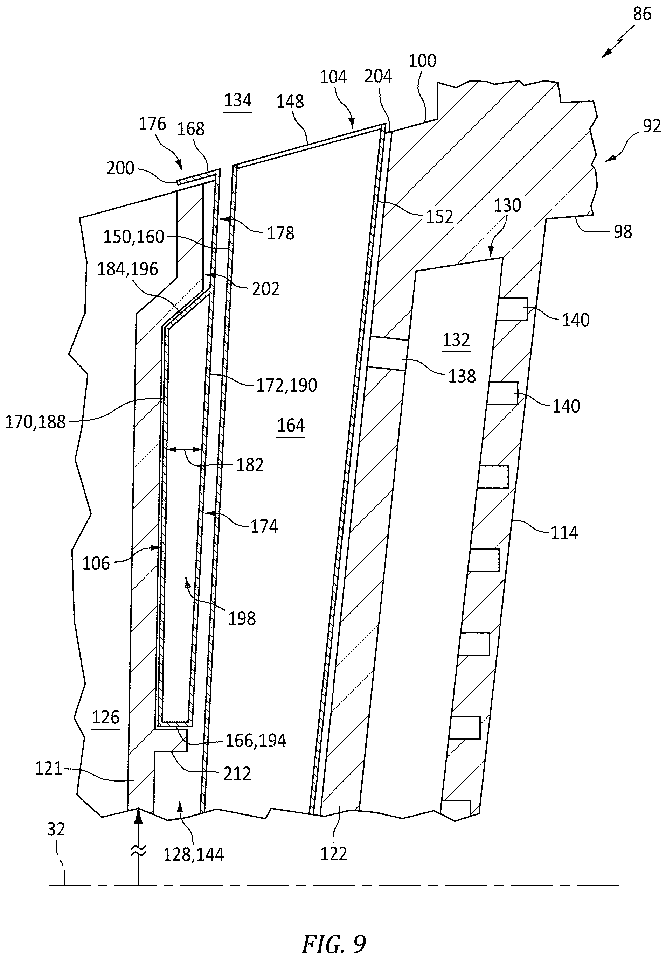

Referring to FIG. 9, the second vane baffle 106 extends spanwise (e.g., radially relative to the powerplant axis 32) from a radial inner, base end 166 of the second vane baffle 106 to a radial outer, tip end 168 of the second vane baffle 106. The second baffle base end 166 is spaced spanwise (e.g., radially) outwards from the airfoil base end 108 (see FIG. 6) as well as the first baffle base end 146 (see FIG. 6) towards the airfoil tip end 110. The second baffle tip end 168 may be disposed at (or near) the airfoil tip end 110 and/or the first baffle tip end 148. The second baffle tip end 168 of FIG. 9, for example, is spanwise (e.g., radially) aligned with or proximate the outer platform outer side 100 and/or the first baffle tip end 148. The second vane baffle 106 extends longitudinally from an upstream end 170 of the second vane baffle 106 to a downstream end 172 of the second vane baffle 106, where the second baffle upstream end 170 is upstream of the second baffle downstream end 172 relative to the core flowpath 78 (see FIG. 6).

The second vane baffle 106 of FIG. 9 includes a hollow baffle body 174, a baffle flange 176 and a baffle neck 178. Referring to FIG. 5, the second vane baffle 106 and each of its members 174, 176 and 178 (see FIG. 9) may extend laterally between and to opposing lateral sides 180A and 180B (generally referred to as "180") of the second vane baffle 106. The second baffle first side 180A of FIG. 5 is laterally next to the airfoil first sidewall 118A. The second baffle second side 180B of FIG. 5 is laterally next to the airfoil second sidewall 118B. Along the baffle body 174, the opposing second baffle sides 180 project longitudinally out from the second baffle upstream end 170 to the second baffle downstream end 172. Referring to FIGS. 5 and 9, each member 172, 180A and 180B of the second vane baffle 106 extends spanwise from the second baffle base end 166 to the second baffle tip end 168. With this arrangement, referring to FIG. 5, the first side portion of the trailing edge cooling passage 144 may also be partially formed by and laterally between the airfoil first sidewall 118A and the second baffle first side 180A. Similarly, the second portion of the trailing edge cooling passage 144 may also be partially formed by and laterally between the airfoil second sidewall 118B and the second baffle second side 180B.

Referring to FIG. 9, the second vane baffle 106 and its baffle body 174 have a longitudinal width 182 extending from the second baffle upstream end 170 to the second baffle downstream end 172. This second baffle longitudinal width 182 may (or may not) decrease as the second vane baffle 106 and its baffle body 174 extend spanwise from (or about) an outer end 184 of the baffle body 174 to (or about) the second baffle base end 166. Referring to FIG. 5, the second vane baffle 106 and its baffle body 174 have a lateral width 186 extending between its opposing second baffle sides 180. This second baffle lateral width 186 may remain uniform (e.g., constant) or decrease as the second vane baffle 106 extends longitudinally from (or about) the second baffle upstream end 170 to (or about) the second baffle downstream end 172.

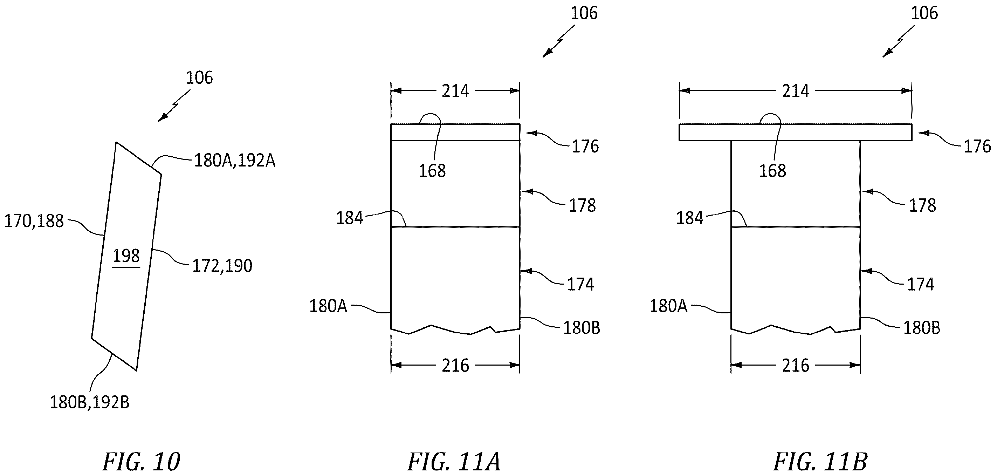

Referring to FIG. 10, the baffle body 174 includes an upstream endwall 188, a downstream endwall 190, a first sidewall 192A and a second sidewall 192B. Referring to FIG. 9, the baffle body 174 also includes an inner base endwall 194, an outer endwall 196 and an interior cavity 198 spanwise capped off by the second baffle base endwall 194 and the second baffle outer endwall 196. Referring again to FIG. 10, the second baffle upstream endwall 188 is disposed at and forms the second baffle upstream end 170. The second baffle downstream endwall 190 is disposed at and forms the second baffle downstream end 172. Each of these second baffle endwalls 188, 190 extends laterally, along a (e.g., entire) lateral width of the second baffle cavity 198, between and to the second baffle first sidewall 192A and the second baffle second sidewall 192B. The second baffle first sidewall 192A is disposed at and forms the second baffle first side 180A. The second baffle second sidewall 192B is disposed at and forms the second baffle second side 180B. Each of these second baffle sidewalls 192 projects longitudinally, along a (e.g., entire) longitudinal length of the second baffle cavity 198, out from the second baffle upstream endwall 188 to the second baffle downstream endwall 190. Referring to FIGS. 9 and 10, each of the baffle body members 188, 190, 192A and 192B also project spanwise, along a (e.g., entire) spanwise length of the second baffle cavity 198, from the second baffle base endwall 194 to the second baffle outer endwall 196. However, in other embodiments, it is contemplated to the second baffle cavity 198 may be open at the second baffle outer end 184 and the second baffle outer endwall 196 may be omitted.

Referring to FIG. 9, the second baffle flange 176 is disposed at the second baffle tip end 168. This second baffle flange 176 projects longitudinally out form the second baffle neck 178, in an upstream direction away from the airfoil trailing edge 114 / the first vane baffle 104, to a longitudinal distal end 200 of the second baffle flange 176. Here, the second baffle flange 176 is cantilevered from the second baffle neck 178.

The second baffle neck 178 projects spanwise (e.g., radially) out from the baffle body 174 and its second baffle outer endwall 196 to the second baffle flange 176. Here, the second baffle neck 178 is inline with and may be a spanwise extension of the second baffle downstream endwall 190. With this arrangement, the second vane baffle 106 is configured with a channel 202; e.g., a slot, a groove, etc. The second baffle channel 202 projects partially longitudinally into the second vane baffle 106 from (a) the second baffle upstream end 170 and/or the flange distal end 200 to (b) the second baffle neck 178. The second baffle channel 202 extends spanwise within the second vane baffle 106 between and to (a) the baffle body 174 and its second baffle outer endwall 196 and (b) the second baffle flange 176.

The second vane baffle 106 of FIG. 9 is arranged longitudinally between and may engage (e.g., contact, abut against, etc.) the intermediate interior wall 121 and the first vane baffle 104. The baffle body 174 and its second baffle upstream endwall 188 of FIG. 9, for example, are disposed longitudinally next to and may (or may not) longitudinally engage the vane airfoil 102 and its intermediate interior wall 121. Here, a portion of the outer platform 92 (e.g., an overhang) projects longitudinally into (and laterally through) the second baffle channel 202. This portion of the outer platform 92 thereby also longitudinally (and laterally) overlaps the baffle body 174 and its second baffle outer endwall 196. The baffle body 174 and the second baffle members 178 and 190 of FIG. 9 are disposed longitudinally next to and may (or may not) longitudinally engage the first vane baffle 104 and its first baffle endwall 160. The second vane baffle 106 of FIG. 9 may thereby substantially plug a region of the trailing edge cooling cavity 128 at an inside corner between the intermediate interior wall 121 and the portion of the outer platform 92. With such an arrangement, a cross-sectional flow area of the trailing edge cooling passage 144 may remain substantially uniform or decrease as the trailing edge cooling passage 144 extends from an opening 204 in the outer platform outer side 100 to a radial inner distal end of the trailing edge cooling passage 144. By contrast, without the second vane baffle 106, the cross-sectional flow area of the trailing edge cooling passage 144 would temporarily increase radially inboard of the opening 204, proximate the outer platform inner side 98 thereby substantially slowing airflow thereabout within the trailing edge cooling passage 144. Inclusion of the second vane baffle 106 may thereby increase cooling flow efficiency within the trailing edge cooling passage 144.

Referring to FIG. 6, the vane airfoil 102 has a spanwise height 206 measured from the airfoil base end 108 to the airfoil tip end 110. The first vane baffle 104 has a spanwise height 208 measured from the first baffle base end 146 to the first baffle tip end 148. The second vane baffle 106 has a spanwise height 210 measured from the second baffle base end 166 to the second baffle tip end 168. Here, the second baffle height 210 is sized smaller than the airfoil height 206 and the first baffle height 208. The airfoil height 206, for example, may be sized at least two-times (2x), three-times (3x), four-times (4x) or even five-times (5x) the second baffle height 210. Similarly, the first baffle height 208 may also or alternatively be sized at least two-times (2x), three-times (3x), four-times (4x) or even five-times (5x) the second baffle height 210. The foregoing exemplary dimensional relationships, however, may vary based on a geometry of, for example, the outer platform portion; e.g., the overhang.

In some embodiments, referring to FIG. 5, the first vane baffle 104 may be configured with a polygonal and/or otherwise tapering cross-sectional geometry. The first vane baffle 104 of FIG. 5, for example, has a substantially triangular cross-sectional geometry. The second vane baffle 106 and its baffle body 174 may also or alternatively be configured with a polygonal cross-sectional geometry. The second vane baffle 106 and its baffle body 174 of FIG. 5, for example, has a substantially rectangular cross-sectional geometry.

In some embodiments, referring to FIG. 9, the intermediate interior wall 121 may be configured with at least (or only) one locator 212. This locator 212 may be configured as a protrusion such as a pedestal, a ridge or a shelf. The locator 212 of FIG. 9 projects longitudinally out from the intermediate interior wall 121 partially into the trailing edge cooling cavity 128 / the trailing edge cooling passage 144 towards the first vane baffle 104. This locator 212 is disposed spanwise along the intermediate interior wall 121 so as to provide a spanwise stop for the second vane baffle 106. The second vane baffle 106 of FIG. 9, for example, is spanwise engaged with and rests on the locator 212 within the trailing edge cooling cavity 128 / the trailing edge cooling passage 144.

In some embodiments, referring to FIG. 11A, a lateral width 214 of the second baffle flange 176 may be equal to (or within +/- 5% of) a lateral width 216 of the other second baffle members (e.g., 174 and 178). In other embodiments, referring to FIG. 11B, the lateral width 214 of the second baffle flange 176 may be different (e.g., greater, or alternatively less) than the lateral width 216 of the other second baffle members (e.g., 174 and 178). By sizing the lateral width 214 of the second baffle flange 176 greater than the lateral width 216 of the other second baffle members (e.g., 174 and 178), the second vane baffle 106 may be easier to handle by a technician during installation of the vane baffles 104 and 106 of FIGS. 5 and 6.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for a turbine engine (24), comprising:
an airfoil (102) including an airfoil first sidewall (118A), an airfoil second sidewall (118B) and an airfoil interior wall (121), the airfoil first sidewall (118A) and the airfoil second sidewall (118B) extending longitudinally between and meeting at an airfoil leading edge (112) and an airfoil trailing edge (114), the airfoil first sidewall (118A) and the airfoil second sidewall (118B) extending spanwise from an airfoil base end (108) to an airfoil tip end (110), and the airfoil interior wall (121) extending laterally along a cavity (128) between the airfoil first sidewall (118A) and the airfoil second sidewall (118B);
a first baffle (104) disposed in the cavity (128), the first baffle (104) extending spanwise from a first baffle base end (146) to a first baffle tip end (148) disposed at the airfoil tip end (110); and
a second baffle (106) disposed in the cavity (128) longitudinally between and next to the first baffle (104) and the airfoil interior wall (121), the second baffle extending spanwise from a second baffle base end (166) to a second baffle tip end (168) disposed at the airfoil tip end (110).

2. The assembly of claim 1, wherein:
the first baffle base end (146) is disposed at the airfoil base end (108); and
the second baffle base end (166) is spaced spanwise outwards from the airfoil base end (108) towards the airfoil tip end (110).

3. The assembly of claim 1 or 2, wherein:
a spanwise height of the first baffle (104) from the first baffle base end (146) to the first baffle tip end (148) is greater than a spanwise height of the second baffle (106) from the second baffle base end (166) to the second baffle tip end (168); or
a spanwise height of the first baffle (104) from the first baffle base end (146) to the first baffle tip end (148) is equal to or greater than two times a spanwise height of the second baffle (106) from the second baffle base end (166) to the second baffle tip end (168).

4. The assembly of any preceding claim, wherein a spanwise height of the airfoil (102) from the airfoil base end (108) to the airfoil tip end (110) is equal to or greater than two times a spanwise height of the second baffle (106) from the second baffle base end (166) to the second baffle tip end (168).

5. The assembly of any preceding claim, wherein:
the second baffle (106) includes a hollow body (174), a flange (176) and a neck (178);
the hollow body (174) is disposed in the cavity (128) longitudinally between and next to the first baffle (104) and the airfoil interior wall (121);
the flange (176) is disposed at the second baffle tip end (168) and outside of the cavity (128); and
the neck (178) projects spanwise from the hollow body (174) to the flange (176),
wherein, optionally:
the hollow body (174) has a polygonal cross-sectional geometry; and/or
the hollow body (174) has a longitudinal width that decreases as the hollow body (174) extends spanwise towards the second baffle base end (166).

6. The assembly of claim 5, further comprising:
a platform (92) connected to the airfoil (102) at the airfoil tip end (110);
the cavity (128) projecting spanwise through the platform (92); and
a portion of the platform (92) projecting longitudinally into a channel (202) formed in the second baffle (106) spanwise between the hollow body (174) and the flange (176).

7. The assembly of any preceding claim, wherein:
the airfoil (102) further includes a locator (212) projecting longitudinally into the cavity (128); and
the second baffle (106) is spanwise abutted against the locator (212) within the cavity (128).

8. The assembly of any preceding claim, wherein the second baffle (106) is formed from a single piece of material.

9. The assembly of any preceding claim, wherein:
the first baffle (104) has a longitudinal width that decreases as the first baffle (104) extends spanwise towards the first baffle base end (146); and/or
the first baffle (104) has a lateral width that decreases as the first baffle (104) extends longitudinally towards the airfoil trailing edge (114).

10. The assembly of any preceding claim, wherein:
the first baffle (104) extends longitudinally from a first baffle end (150) to a first baffle trailing edge (152); and
the first baffle (104) extends laterally between a first baffle first side (154A) and a first baffle second side (154B) with the first baffle second side (154B) meeting the first baffle first side (154A) at the first baffle trailing edge (152) and with the first baffle first side (154A) laterally spaced from the first baffle second side (154B) at the first baffle end (150).

11. The assembly of claim, wherein:
a passage (144) is formed within the airfoil (102) by a portion of the cavity (128) outside of the first baffle (104) and the second baffle (106);
the airfoil (102) further includes a second airfoil interior wall (122) and a trailing edge cooling circuit (130) with a plurality of inlets (138) and a plurality of outlets (140);
the plurality of inlets (138) project through the second airfoil interior wall (122) and are fluidly coupled to the passage (144); and
the plurality of outlets (140) are disposed spanwise along the airfoil trailing edge (114) and are fluidly coupled to an environment (142) outside of the airfoil (102).

12. The assembly of claim 11, wherein the trailing edge cooling circuit (130) further includes a circuit cavity (132) longitudinally between and fluidly coupled to the plurality of inlets (138) and the plurality of outlets (140).

13. The assembly of any preceding claim, further comprising:
a turbine vane structure (86) including the airfoil (102), the first baffle (104) and the second baffle (106); and/or
an inner platform (90) extending circumferentially around an axis (32), an outer platform (92) extending circumferentially around the axis (32), and a plurality of vanes (94) arranged circumferentially around the axis (32) in an array, each of the plurality of vanes (94) extending spanwise from the inner platform (90) to the outer platform (92), a first of the plurality of vanes (94) comprising the airfoil (102), the airfoil (102) connected to the inner platform (90) at the airfoil base end (108), and the airfoil (102) connected to the outer platform (92) at the airfoil tip end (110).

14. An assembly for a turbine engine (24), comprising:
an inner platform (90) extending circumferentially about an axis (32);
an outer platform (92) radially outboard of the inner platform (90) and extending circumferentially about the axis (32); and
a plurality of vanes (94) arranged circumferentially about the axis (32) in an array radially between the inner platform (90) and the outer platform (92), a first of the plurality of vanes (94) including
an airfoil (102) extending spanwise between and connected to the inner platform (90) and the outer platform (92), the airfoil (102) extending longitudinally from an airfoil leading edge (112) to an airfoil trailing edge (114), and the airfoil (102) extending laterally between opposing airfoil sides (116), wherein a cavity (128) projects radially through the outer platform (92) and spanwise into the airfoil (128);
a first baffle (104) disposed in the cavity (128) along the outer platform (92) and the airfoil (128); and
a second baffle (106) disposed in the cavity (128) along the outer platform (92) and the airfoil (102), the second baffle (106) longitudinally engaging the first baffle (102), wherein the outer platform (92) projects longitudinally into a channel (202) of the second baffle (106).

15. An assembly for a turbine engine (24), comprising:
an inner platform (90) extending circumferentially about an axis (32);
an outer platform (92) radially outboard of the inner platform (90) and extending circumferentially about the axis (32); and
a plurality of vanes (94) arranged circumferentially about the axis (32) in an array radially between the inner platform (90) and the outer platform (92), a first of the plurality of vanes (94) including
an airfoil (102) extending radially between and connected to the inner platform (90) and the outer platform (92), the airfoil (102) extending longitudinally from an airfoil leading edge (112) to an airfoil trailing edge (114), and the airfoil (102) extending laterally between opposing airfoil sides (116), wherein a cavity (128) projects radially through the outer platform (92) and into the airfoil;
a first baffle (104) projecting radially a first distance into the cavity (128); and
a second baffle (106) projecting radially a second distance into the cavity (128) that is less than the first distance, the second baffle (106) abutted longitudinally against the first baffle (104) within the cavity (128).
